# EUROPEAN PATENT APPLICATION

(11) **EP 1 154 644 A1**
(43) Date of publication of application: **14.11.2001**
(21) Application number: 00981806.3
(22) Date of filing: 18.12.2000
(51) Int. Cl.: H04N 5/91, H04N 5/92, G11B 20/10

(54) **DATA TRANSMISSION DEVICE AND DATA TRANSMISSION METHOD, DATA RECEPTION DEVICE AND DATA RECEPTION METHOD**

(30) Priority: 17.12.1999 JP 359399
(71) Applicant: Sony Corporation, Tokyo 141-0001 (JP)
(72) Inventor: KOBAYASHI, Ikuo, c/o Sony Corporation, Tokyo 141-0001 (JP)
(74) Representative: Pilch, Adam John Michael
(86) International application number: JP0008960
(87) International publication number: WO0145401

(57) **Abstract**

The format of SDTI data transmitted and received in a data transmission/reception system is composed of a pay-load (PAD) part in which data including compressed video data is stored, a start sync code SAV (start of active video) part disposed before the PAD part and in which a sync code SAV indicative of the start of the PAD part is stored, an ancillary data (ANC) part disposed before the SAV part and in which information including audio data and auxiliary data are stored, and an end sync code EAV (end active video) part disposed before the ANC data part and in which an EAV code indicative of the end of the PAD part is stored. An A/V server stores, for transmission, process information indicative of a process of processing video data in a receiver. The receiver holds received video/audio data in a memory, and controls the sequence of reading the video/audio data held in the memory based on the process information.

## Description

### Technical Field

The present invention relates to a data transmitting apparatus and method. It also relates to a data receiving apparatus and method.

### Background Art

Recently, information is served over many channels owing to the prevalence of the so-called CATV (cable television, community antenna television) and others. Along with such a tendency, it has been more and more required to simultaneously record and play back, as well as to play back while recording, a plurality of video and audio data from a single video/audio data recorder/player which records and/or plays back (will be referred to as "record/play back" hereunder) video data and/or audio data (will be referred to as "video/audio data" hereunder). However, the conventional video tape recorder (VTR) cannot meet this requirement. To meet the increasing requirement, an apparatus called "video server (or AV (= audio and/or video) server)" is spreading which uses a recording medium randomly accessible such as a hard disc (will be referred to as "HD" hereunder) and records/plays back video/audio data to/from the recording medium.

Generally, it is required that the video server used in a broadcasting station should be able to transfer necessary data at a high rate and use a recording medium having a large capacity for recording data for a long time since video/audio data recorded/played back to/from the recording medium is required to have a high image quality and sound quality.

To meet the above requirement, it has been attempted to transfer data at a higher rate and store a larger volume of data by the use of a data recorder/player including a plurality of HD drives which can store video/audio data and process the data in parallel, and secure the reliability when any of the plurality of HD drives fails by recording parity data in each HD.

With the above attempts, it has recently become possible to realize a multichannel video server capable of supporting a wide variety of applications. For example, even when the required number of channels varies depending upon a program content the broadcasting station is going to serve and manner in which the station is going to broadcast the program, material data including a plurality of video/audio data is recorded dispersedly, or the same material data is transmitted simultaneously over multiple channels or played back over multiple channels at staggered times. Namely, a so-called video on demand (VOD) system, near video on demand (NVOD) system and the like can thus be organized.

The data recorder/player adopted in such a video server uses a RAID (Redundant Arrays of Inexpensive Disks) technology proposed by David A. Patterson et. al. in the dissertation "A Case for Redundant Arrays of Inexpensive Disks (RAID)", ACM SIGMOND Conference, Chicago, III, Jun, 1-3, 1988. A RAID system is composed of a plurality of HD drives (will be referred to as "HDD" hereunder) each including a plurality of HDs.

According to the dissertation, the RAID system consists of five subsystems RAID-1 to RAID-5. The RAID-1 system is called a so-called "Mirrored disc" in which the same content is written to two HDDs. The RAID-2 and -3 systems are such that input data is divided into predetermined lengths of data and written to a plurality of HDDs. More specifically, the RAID-2 system uses Humming code as the error correction code, while the RAID-3 system generates parity data being an exclusive OR of data blocks corresponding to each other in each HDD and writes it to another HDD. The RAID-4 and -5 systems are such that data is divided into large blocks, one data division is recorded as a data block to one HDD and parity data being an exclusive OR of data blocks corresponding to each other in each HDD is recorded as parity block to another HDD. In particular, the RAID-4 writes the parity block to the same HDD while the RAID-5 writes the parity block dispersedly to a plurality of HDDs.

As a typical example of the video server using such a data recorder/player, there has been proposed a one including a plurality of internal input/output processors by which video/audio data is recorded/played back to/from HDDs. In the video server, each of the plurality of input/output processors is adapted to operate in a time slot assigned thereto. The input/output processor processes data supplied from outside, sends it to a recording medium nonlinearly accessible such as HD and outputs data read from the recording medium to outside. Thus, the video server operates as if the plurality of input/output processors processes data simultaneously and in parallel when the operation is observed for a long period of time.

The above video server is provided with a RAID unit including a plurality of HDDs and a CPU which controls the HDD based on command data supplied from the input/output processors. Under the control of the CPU, the RAID unit processes data supplied from the input/output processor in a predetermined manner and records it to the HDD, and processes data read from the HDD in a predetermined manner and outputs it to the input/output processor.

As an interface format for use to transfer data between apparatuses used to produce a broadcast program, such as the aforementioned video server, there is available an SDTI (serial digital transport interface) format defined by the SMPTE (Society of Motion Picture and Television Engineers)-305TM standard.

The SDTI format is destined primarily to connect a plurality of broadcasting apparatuses to each other. It has been standardized to transmit compressed video/audio data.

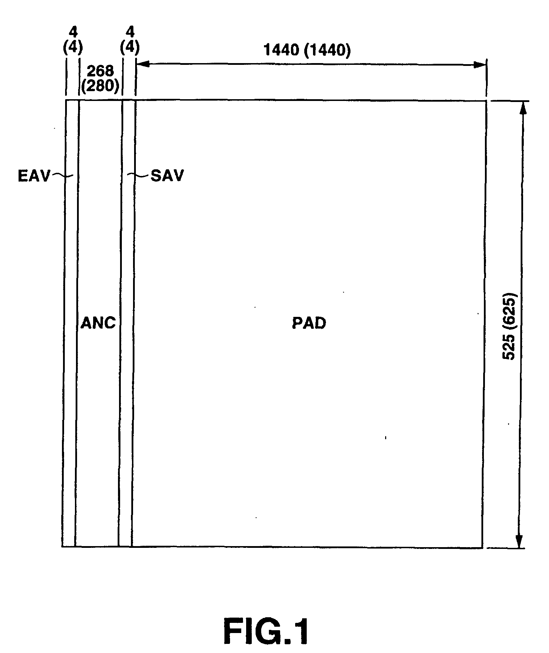

According to the standard NTSC (National Television System Committee) 525, the STDI format in one frame is composed of composed of 1716 words including 10 bits/word per line in the horizontal direction and 252 lines in the vertical direction and includes, in the horizontal direction, a 4-word EAV (end of active video) part which stores a sync code EAV indicative of the end of a pay-load part which will further be described later, 286-word ANC (ancillary data) part which stores header data, auxiliary data, etc., 4-word SAV (start of active video) part which stores a sync code SAV indicative of the start of the pay-load part, and a 1440-word PAD (pay load) part which stores video/audio data etc., as shown in FIG. 1. According to the standard PAL (phase alternation by line) 625, the SDTI format in one frame is composed of 10 bits/word per line in the horizontal direction and 625 lines in the vertical direction, and includes a 4-word EAV part, 280-word ANC part, 4-word SAV part, and a 1440-word PAD part, as will be seen from FIG. 1. Note that the numerical values for the PAL 625 standard are indicated as parenthesized in FIG. 1. Also note that the SDTI format is detailed in the Japanese Patent Application Nos. 6-144403, 7-066297 and 8-506402 for example. Therefore, the SDTI format will not be detailed herein.

In the SDTI format, the PAD (pay load) part stores mainly compressed video/audio data. Note that the SDTI format is versatile to keep up with the serial digital interface (SDI) standardized as SMPTE-259M, and can transmit non-compressed video/audio data to be transmitted in an SDI format. In the SDTI format, control data called attribute data is stored in a predetermined area, before compressed video/audio data, of the PAD part.

The attribute data is intended to designate a content to be controlled when a receiver-side apparatus plays back video/audio data. It is composed of for example gain control data intended to control the gain for playback of the video/audio data, memory control data intended to play back the video/audio data at a variable speed, etc.

The receiver-side apparatus uses the attribute data stored in the PAD part to control playback of the video/audio data.

In a system which transmits data in the aforementioned SDTI format, when a data transmitter uses the attribute data stored in the PAD part to control playback of the video/audio data in a data receiver, the data receiver has to expand all data stored in the PAD part for analysis.

Thus, after the data receiver expands and analyzes received data, it has to control playback of the video/audio data based on the content of the attribute data, which is an excessively large burden of data processing.

Also, for transmission of HDCAM signal for the so-called high definition television (HDTV) in the STDI format, the data transmitter stores only compressed HD (high definition) video/audio data in the PAD part so that the data receiver can record and play back data stored in the PAD part as it is.

Since the HDCAM signal carries a large amount of data, the data transmitter cannot store the aforementioned attribute data in the PAD part and the data receiver cannot smoothly control playback of video/audio data.

For further detail of the above, slow playback at a variable speed and display by the data receiver of HDCAM signal in the NTSC 525 format will be considered herebelow:

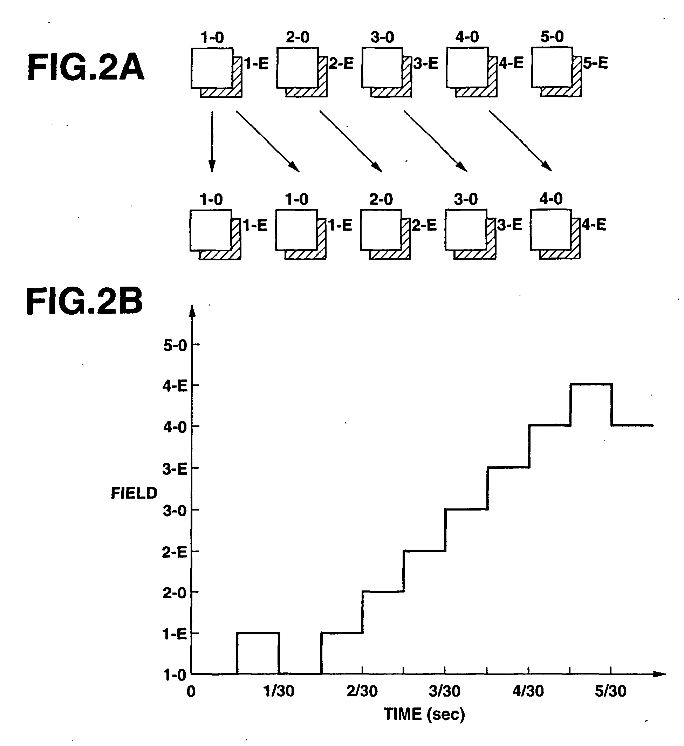

For playback of video/audio data at the normal speed, the data transmitter transmits HDCAM signal in the SDTI format in units of a frame sequentially from the first frame as shown at the upper stage of FIG. 2A. Thus, the data receiver receives and decodes the HDCAM signal in the SDTI format in units of a frame, and outputs an odd field (1-O) of a first frame, even field (1-E) of the first frame, odd field (2-O) of a second frame, ..., even field (4-E) of a fourth frame in this order to a monitor at every 1/60 sec.

On the other hand, for playback of video/audio data at three fourths of the normal speed, the data transmitter transmits the first frame of HDCAM signal, for example, twice, and then the second frame to third frame as shown, at the lower stage of FIG. 2A. Namely, for the playback of video/audio data at the normal speed, four different frames of HDCAM signal are transmitted, while for the playback of the video/audio data at three fourths of the normal speed, a part of three frames of HDCAM signal is repeated to provide four frames of HDCAM signals and these HDCAM signal are transmitted. Thus, the data receiver receives and decodes the HDCAM signals in the SDTI format and outputs the odd field (1-O) of a first frame, even field (1-E) of the first frame, odd field (1-O) of the first frame, ..., even field (3-E) of the third frame in this order to the monitor at every 1/60 sec.

Thus, an image played back and displayed on the monitor will be distorted since the field is not updated when it has simply been increased in number as the time elapses but is updated at every 1/30 sec for example at which an odd field of the first frame comes again after an even field of the first frame, as shown in FIG. 2B.

Also in a reverse playback as well as in the slow playback, a similar problems will take place.

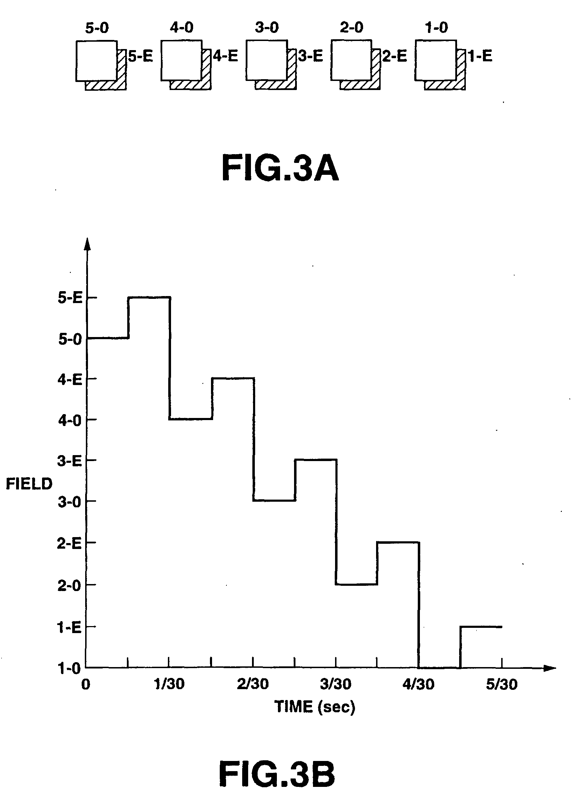

For reverse playback of an HDCAM signal from the first frame to fifth frame for example, the data transmitter transmits HDCAM signals in the SDTI format in units of a frame sequentially from the fifth frame, as shown in FIG. 3A. Thus, the data receiver receives and decodes the HDCAM signals in the SDTI format in units of a frame, and outputs an odd field (5-O) of a fifth frame, even field (5-E) of the fifth frame, odd field (4-O) of the fourth frame, even field,..., an even field (1-E) of the first frame in this order to the monitor at every 1/60 sec.

Thus, an image played back and displayed on the monitor will be distorted since the field is not updated when it has simply been increased in number as the time elapses but the image is normally changed in the played-back order between fields, as shown in FIG. 3B.

The data receiver cannot smoothly control playback of video/audio data. Disclosure of the Invention

Accordingly, the present invention has an object to overcome the above-mentioned drawbacks of the prior art by providing a data transmitting apparatus and method in which a data receiver is enabled to smoothly control playback of video/audio data, and a data receiving apparatus and method in which playback of the video/audio data can smoothly be controlled.

The above object can be attained by providing a data transmitter which transmits compressed video and audio data by serializing data having a structure composed of a pay-load part in which data including compressed video data is stored, a start sync code part disposed before the pay-load part and in which a start of active video code indicative of the start of the pay-load part is stored, an ancillary data part disposed before the start sync code part and in which information including audio data and auxiliary data are stored, and an end sync code part disposed before the ancillary data part and in which an end of active video code indicative of the end of the pay-load part, the apparatus including according to the present invention:
a controlling means for generating process information indicative of a process of processing video data in a receiver which receives serial data obtained by serializing the above data; and
a data generating means for generating data by storing the process information generated by the controlling means into the ancillary means;
the data including the process information generated by the data generating means and having the above data structure being serialized for transmission.

The above data transmitter according to the present invention generates data by storing the process information generated by the controlling means into the ancillary data part, and serializes the data for transmission.

Also, the above object can be attained by providing a data transmitting method for transmitting compressed video and audio data by serializing data having a structure composed of a pay-load part in which data including compressed video data is stored, a start sync code part disposed before the pay-load part and in which a start of active video code indicative of the start of the pay-load part is stored, an ancillary data part disposed before the start sync code part and in which information including audio data and auxiliary data are stored, and an end sync code part disposed before the ancillary data part and in which an end of active video code indicative of the end of the pay-load part, the method including, according to the present invention, steps of:
generating process information indicative of a process of processing the video data in a receiver which receives serial data obtained by serializing the above data; and
generating data by storing the generated process information into the ancillary means;
the data including the generated process information and having the above data structure being serialized for transmission.

The above data transmitting method according to the present invention generates data by storing the generated process information into the ancillary data part, and serializes the data for transmission.

Also, the above object can be attained by providing a data receiver which receives serial data transmitted from a data transmitter which transmits compressed video and audio data by serializing data having a structure composed of a pay-load part in which data including compressed video data is stored, a start sync code part disposed before the pay-load part and in which a start of active video code indicative of the start of the pay-load part is stored, an ancillary data part disposed before the start sync code part and in which information including audio data and auxiliary data are stored, and an end sync code part disposed before the ancillary data part and in which an end of active video code indicative of the end of the pay-load part, the apparatus including according to the present invention:
a storage means for holding the video and audio data; and
a reading sequence controlling means for controlling the sequence of reading the video and audio data held in the storage means based on process information stored in the ancillary data part and indicative of a process of processing the video data.

The above data receiver according to the present invention controls the sequence of reading the video and audio data held in the storage means by the reading sequence controlling means based on the process information stored in the ancillary data part.

Also, the above object can be attained by providing a data receiving method for receiving serial data transmitted by a data transmitting method in which compressed video and audio data are transmitted by serializing data having a structure composed of a pay-load part in which data including compressed video data is stored, a start sync code part disposed before the pay-load part and in which a start of active video code indicative of the start of the pay-load part is stored, an ancillary data part disposed before the start sync code part and in which information including audio data and auxiliary data are stored, and an end sync code part disposed before the ancillary data part and in which an end of active video code indicative of the end of the pay-load part, the method including, according to the present invention, steps of:
holding the video and audio data in a storage means; and
controlling the sequence of reading the video and audio data stored in the storage means based on process information stored in the ancillary data part and indicative of a process of processing the video data.

In the above data receiving method according to the present invention, the sequence of reading the video and audio data held in the storage means is controlled based on the process information stored in the ancillary data part.

### Brief Description of the Drawings

FIG. 1 explains the SDTI format in one format.
FIG. 2A explains the conventional slow playback, showing in the upper stage a series of fields of an HDCAM signal in the SDTI format, sent from an apparatus which sends data when the data is played back at the normal speed, and in the lower stage a series of fields of the HDCAM signal in the SDTI format, sent from an apparatus which sends data when the data is played back at a slower speed which is three fourths of the normal speed.
FIG. 2B explains the conventional slow playback, showing the relation between a time and an image played back by a receiver and displayed on a monitor.
FIG. 3A explains the reverse playback, showing a series of fields of an HDCAM signal in the SDTI format, sent from an A/V server.
FIG. 3B shows the relation between a time and an image played back by the receiver and displayed on the monitor.
FIG. 4 is a block diagram of the data transmission/reception system according to the present invention.
FIG. 5 explains the format of SDTI data format used in transmitting an HDCAM signal in one frame, transmitted and received by the data transmission/reception system shown in FIG. 4.
FIG. 6 explains the structure of header data.
FIG. 7A explains the structure of audio data, showing the structure of a 20-bit AES packet for three samples.
FIG. 7B explains the structure of audio data, showing the structure of a 20-bit AES packet for four samples.
FIG. 8 explains the structure of an audio control packet.
FIG. 9 explains the structure of LTC.
FIG. 10 explains the structure of VITC.
FIG. 11 explains the structure of active line and slow playback control data.
FIG. 12 explains the structure of the slow playback control data.
FIG. 13A explains the structure of video data, showing a data structure of fixed-length video data.
FIG. 13B explains the structure of video data, showing a data structure of variable-length video data.
FIG. 14 is a block diagram of the A/V server in the data transmission/reception system according to the present invention, showing the internal construction of the A/V server.
FIG. 15 is a block diagram of the receiver in the data transmission/reception system, showing the internal construction of the receiver.
FIG. 16A explains the slow playback, showing a series of fields of an HDCAM signal in the SDTI format, sent from an A/V server when the data is slowly played back at three fourths of the normal speed.
FIG. 16B explains the slow playback, showing a series of fields outputted from the receiver.
FIG. 16C explains the slow playback, showing the relation between a time and an image played back by the receiver and displayed on the monitor.
FIG. 17A explains the reverse playback, showing a series of fields of an HDCAM signal in the SDTI format, sent from the A/V server.
FIG. 17B explains the reverse playback, showing a series of fields outputted from the receiver.
FIG. 17C explains the reverse playback, showing the relation between a time and an image played back by the receiver and displayed on the monitor.
FIG. 18A explains the operation of reading video/audio data from a memory provided in the receiver, showing in the upper stage a series of fields of SDTI data sent from the A/V server and in the lower stage a series of fields of SDTI data received by the receiver.
FIG. 18B explains the operation of reading video/audio data from the memory in the receiver, showing the video/audio data being stored into the memory at each field.
FIG. 18C explains the operation of reading video/audio data from the memory in the receiver, showing fields outputted from the receiver.
FIG. 18D explains the operation of reading video/audio data from the memory in the receiver, showing next video/audio data being stored into the memory at each field.
FIG. 19A explains the operation of reading video/audio data from the memory in the receiver during slow playback, showing in the top stage a series of fields of SDTI data sent from the A/V server for slow playback at a speed of three sevenths of the normal speed, and in the lower seven stages video/audio data received by the receiver being stored in the memory at each field.
FIG. 19B explains the operation of reading video/audio data from the memory in the receiver during slow playback, showing the order of data which are played back the receiver and displayed on the monitor.

### Best Mode for Carrying Out the Invention

These objects and other objects, features and advantages of the present invention will become more apparent from the following detailed description of the preferred embodiments of the present invention when taken in conjunction with the accompanying drawings.

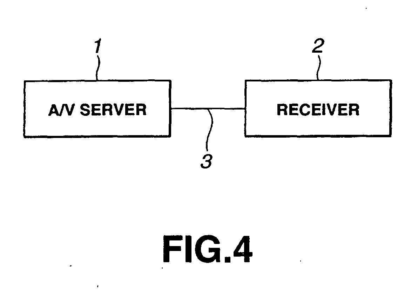

Referring now to FIG. 4, there is illustrated in the form of a block diagram the data transmission/reception system according to the present invention, in which the data transmitter is applied to a so-called A/V (audio/video) server 1 which records and/or plays back (will be referred to as "records/plays back" hereunder) data including video and/or audio data (will be referred to as "video/audio data" hereunder) while the data receiver is applied to a receiver 2 which receives and plays back data sent from the A/V server 1. Namely, the data transmission/reception system according to the present invention is composed of the A/V server 1 and receiver 2 by connecting them to each other by a transfer cable 3 through which data is sent in a transmission format conforming to the SDTI (serial digital transport interface) defined in the SMPTE (Society of Motion Picture and Television Engineers)-305M standard, such as a coaxial cable, optical cable or the like.

In the data transmission/reception system, the A/V server 1, the A/V server 1 stores, for transmission, data (HDCAM data) including video/audio data being so-called captured HD (high definition) image signal in the form of serial data (will also be referred to as "SDTI data" wherever appropriate) conforming to the SDTI format which will further be described later, while the receiver 2 receives serial data transmitted from the A/V server 1 and controls playback at a variable speed of the video/audio data based on control data stored in the serial data.

First, the SDTI format in which HDCAM signal is transmitted will be described.

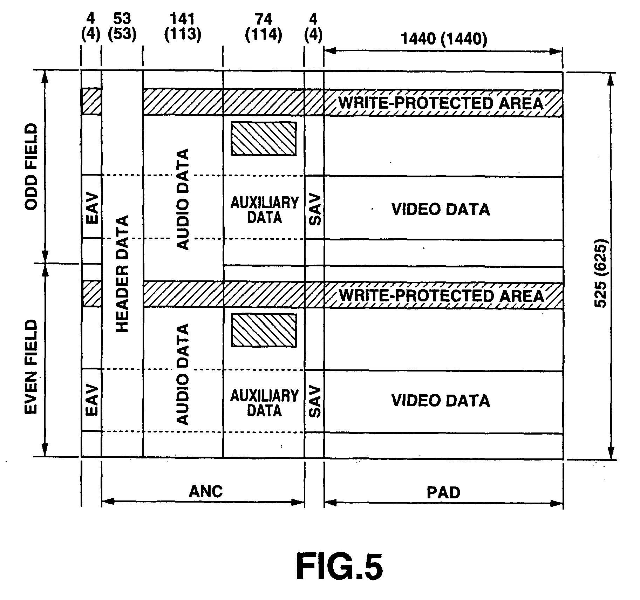

According to the NTSC (National Television System Committee) 555 standard, the STDI data format in one frame transmitted and received in the data transmission/reception system is composed of 1716 words in the horizontal direction and 525 lines in the vertical direction and includes, in the horizontal direction, a 4-word EAV part in which an EAV (end of active video) code indicative of the end of a pay-load part which will further be described later is stored, 268-word ancillary data (ANC) part in which there are stored header data, audio data, auxiliary data, etc., 4-word SAV part in which an SAV (start of active video) code indicative of the start of the pay-load part is stored, and a 1440-word pay-load (PAD) part in which video data etc. are stored, and in the vertical direction, odd and even fields forming together one frame, as split from each other, which will be seen from FIG. 5.

According to the standard PAL (phase alternation by line) 625, the SDTI data format in one frame is composed 1728 words in the horizontal direction and 625 lines in the vertical direction (the numerical values are indicated as parenthesized in FIG. 5) and includes, in the horizontal direction, a 4-word EAV part, 280-word ANC part, 4-word SAV and a 1440-word PAD part, and in the vertical direction, a first field being an odd field for example and a second field being an even field for example, forming together one frame, as slit from each other.

The EAV part stores a 4-word sync code indicative of the end of the PAD part area.

The SAV part stores a 4-word sync code indicative of the start of the PAD part area.

Note that to each of the end and start sync codes stored in the EAV and SAV parts, respectively, there is assigned a code which will never appear as a code which is stored in any other areas.

The ancillary data (ANC) part stores mainly header data, audio data and auxiliary data. More specifically, according to the standard NTSC 525, the ANC part stores 53-word header data, 141-word audio data and 74-word auxiliary data. According to the PAL 625 standard, the ANC part stores 53-word header data, 113-word audio data, and 114-word auxiliary data. The ANC part will further be described herebelow. Note that the audio data may be stored in the PAD part. In this case, the audio data will not be stored in the ANC part unless it is necessary.

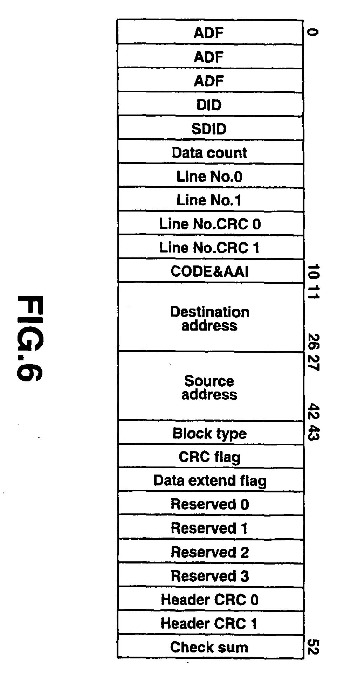

According to both the standards NTSC 525 and PAL 625, the header data is stored in each line in the ANC part, and consists, as shown in FIG. 6, of a 3-word auxiliary data flag (ADF), 1-word first data ID (DID = data ID), 1-word second data ID (SDID = secondary data ID), 1-word data count (Data count), 2-word line numbers (Line No. 0 and Line No. 1), 2-word line number cyclic redundancy check codes (Line No. CRC0 and Line No. CRC1),1-word code and authorized address identifier (CODE & AAI), 16-word destination address (Destination address), 16-word source address (Source address), 1-word block type (Block type), 1-word CRC flag (CRC flag), 1-word data extend flag (Data extend flag), 4-word reserved's (Reserved 0, Reserved 1, Reserved 2 and Reserved 3), 2-word header cyclic redundancy check codes (Header CRC0 and Header CRC1), and a 1-word check sum (Check sum).

The auxiliary data flag (ADF) stores, as values, three words "000h", "3FFh" and 3FFh" in the hexadecimal notation.

Each of the first data ID (DID) and second data ID (SDID) stores values "40h" and "01h" in the hexadecimal notation. That is, each of the first data ID (DID) and second data ID (SDID) stores a code indicating whether the data stored in the PAD part is an SID (serial digital interface) data defined in the SMPTE-259M standard or not, in other words, whether it is a non-compressed or compressed data.

The data count (Data count) stores a hexadecimal notation "22Eh" indicating a header data length, that is, a number of words in other than the ADF, DID and SDID, Data count and Check sum, and more specifically 46 words.

Each of the line numbers (Line No. 0 and Line No. 1) stores data indicating a line number the header data belongs to in one frame. Note that the reason that there are the two words including the Line No. 0 and Line No.1 is that a positive reception of a line number at the receiver side is assured by the two same data.

The Line No. CRC0 and Line No. CRC1 store CRC codes, respectively, for codes stored in the Line No. 0 and Line No. 1. The Line No. CRC0 and Line No. CRC1 store two words corresponding to the Line No. 0 and Line No. 1, respectively.

The Code & AAI store four bits each. The Code indicates an effective data length (length of data between the SAV and EAV parts) in the PAD part. When the PAD part consists of 1440 words, the Code stores a hexadecimal value "0001h". When the PAD part consists of 1920 words, the Code stores a hexadecimal value "0010h". When the PAD part stores SDI data, the Code stores a hexadecimal value "0000h". On the other hand, the AAI (authorized address identifier) indicates a format in which a Destination address and Source address are to be described. When these addresses are described in a free format for example, the AAI stores a hexadecimal value "0000h". When they are described in the IPv6 format, the AAI stores a hexadecimal value "0001h". Note that "IPv6" indicates a version 6 of the Internet protocol (IP) and in this IPv6 format, the addresses are extended to 16 bytes.

The Destination address and Source address indicate addresses of a data receiver and data transmitter, respectively, in the format defined in the AAI. These Destination and Source addresses include IP address etc. for example.

The Block type is intended to identify the format of the PAD part. That is, upper 2 bits in the Block type are used to judge whether the PAD part is in a fixed frame without ECC (error correction code), in a fixed frame with ECC or is of a variable length, thereby determining whether the PAD part is in a fixed frame or of a variable length. Further, other 6 bits are used to designate a size of the PAD part and a transmission rate, etc.

The CRC flag is to judge whether the PAD has a CRC added thereto. In case the CRC flag has a CRC added thereto and the CRC is found added to the end of the PAD part, a value "01h" in the hexadecimal notation is stored in the CRC flag. In case no CRC is added to the PAD part, a hexadecimal value "00h" is stored in the CRC flag.

The Data extent flag is to judge whether there exists extension data between the header data and SAV part. In case no extension data exists, the Data extend flag stores a hexadecimal value "00h".

The Reserved 0,1,2 and 3 are not defined at present but are available for future use.

The Header CRC0 and Header CRC1 stores a CRC code for all 10-bit width from the DID to the last Reserved 3. The generating function for these Header CRC0 and Header CRC1 is the same as that for the Line Nos. CRC0 and CRC1.

The Check sum is for use to detect an error in the header data. Note that since the detection cannot sufficiently be done with the Check sum alone, a header data error detection code is stored in the Line Nos. CRC0 and CRC1.

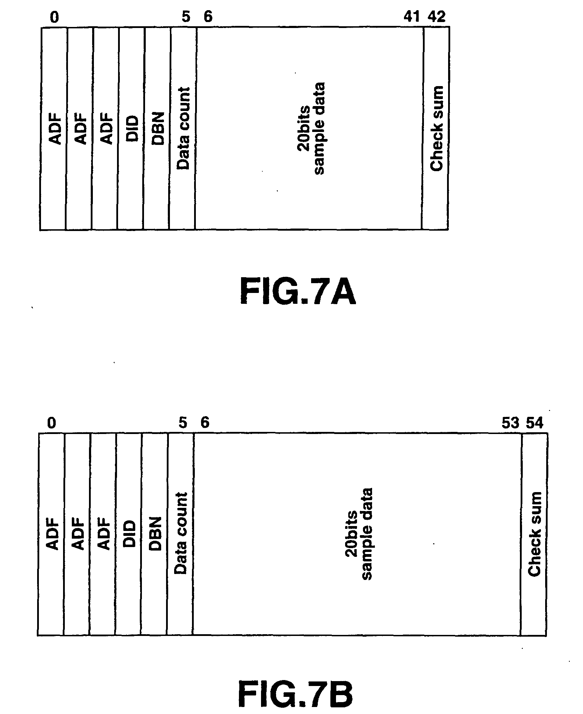

In the ANC part, there is provided an audio data area just after the above-mentioned header data. The audio data is of 24 bits and 8 channels. According to the standard NTSC 525, the audio data is stored in each of the lines 1 to 525 except for the lines 10, 11, 273 and 274. According to the PAL 625 standard, the audio data is stored in each of the lines 1 to 625 except for the lines 6, 7, 319 and 320. In case the audio data is a so-called 20-bit AES (Audio Engineering Society) packet, it consists, for three samples per channel in one audio data packet as shown in FIG. 7A, of a 3word auxiliary signal flag (ADF), 1-word data ID (DID), 1-word data block number (DBN), 1-word data count (Data count), 36-word 20-bit sample data (20 bits sample data), and a 1-word check sum (Check sum). Also, the audio data includes, as shown in FIG. 7B, a 3-word ADF, 1-word DID, 1-word DBN, 1-word Data count, 48-word, 20-bit sample data (20bits sample data), and a 1-word Check sum.

Note that the AES audio data is defined in the standard ANSI-S4.40, and called "AES-3". In the following, it will be assumed that the audio data in this embodiment is transmitted with the AES-3 data inserted to the end of the header data in the ANC part.

As seen from both FIGS. 7A and 7B, the ADF, DID and Check sum are similar to the aforementioned ADF, DID and Check sum in the aforementioned header data. Note that the DID stores a hexadecimal value "2FFh" indicating an audio data packet (Audio group 1) on the channels 1 to 4, and a hexadecimal value "1FDh" indicating an audio data packet (Audio data group 2) on the channels 5 to 8.

Also, the DBN stores numbers indicative of block numbers starting at the top of this packet block.

The Data count indicates a number of words in data included in the Data count to Check sum areas.

Since there is available a 36-word area for an AES audio data for three samples as shown in FIG. 7A, the Data count stores a hexadecimal value "24h". Further, all the EAV, SAV, ANC, PAD parts, etc. including the audio data area are of a 1-word, 10-bit structure. Data is stored in the bits 0 to 8, parity data at the bits 0 to 8 (including even or odd parity data) are inserted at the bit 9, and an inverted bit of the parity data is inserted at the bit 10. That is, when the parity data is "1", "0" will be inserted at the bit 10. When the parity data is "0", "1" will be inserted at the bit 10. A hexadecimal value "24h" stored in the Data count is "0010 0100" in the binary notation, which includes a larger number of "0" than "1". Thus, the parity data will be "0" while the inverted bit will be "1". Therefore, "10" is inserted at the bits 9 and 10. Since the "10" (at the bits 9 and 10) is "2" when it is expressed with 2 bits, the Data count will finally have "224h" stored therein. Each of the data blocks is configured as will be described in detail below but note that the Data count of each block stores data in a 3-bit notation (hexadecimal notation) determined following the aforementioned procedure.

Also, for an AES audio data for four samples as shown in FIG. 7B, the Data count will store "230h" following the above-mentioned procedure. That is, since there is available a 48-word area for the AES audio data for the four samples, the Data count will store a hexadecimal value "30h" as first two bits. The "30h" is "0011 0000" when it is expressed in the binary notation, which includes a larger number of "0" than "1". So, the Data count will have, inserted at the bit 3, "2" which is an expression of "10" with two bits and will finally store "230h".

The 20bits sample data is an area in which AES audio data is actually stored. In the case of three samples shown in FIG. 7A, the audio data area stores an audio data at the words 6 to 41. In the case of three samples of AES audio data shown in FIG. 7A, audio data is stored at the words 6 to 41, and in the case of four samples of AES audio data shown in FIG. 7B, audio data is stored at the words 6 to 53.

Further, in the ANC part, there is provided auxiliary data just after such an audio data. The auxiliary data consists of an audio control packet, longitudinal time code (LTC), vertical internal time code (VITC), and active line and slow control data.

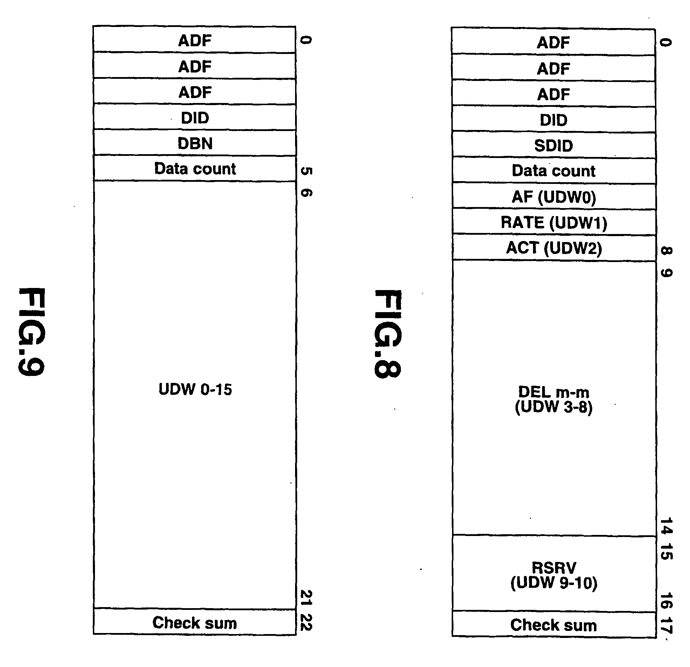

The audio control packet is used to control audio data. According to the standard NTSC 525, the data is stored in the lines 12 and 275 of the lines 1 to 525. According to the PAL 625 standard, the data is stored in the lines 8 and 321 of the lines 1 to 625. As will be seen from FIG. 8, the audio control packet consists of a 3word ADF, 1-word first data ID (DID), 1-word second data ID (SDID), 1-word data count (Data count), 1-word AF (UDW = user data words) 0,1-word RATE (UDW1), 1-word ACT (UDW2), 6-word DEL m-n (UDW3-8), 2-word RSRV (UDW9-10), and a 1-word check sum (Check sum).

The 3-word ADF stores "000h", "3FFh" and "3FFh" as in the ADF having been described in the foregoing with reference to FIGS. 6 and 7.

The DID and SDID store ID data indicating that the packets are audio control packets. In this embodiment, the DID stores "250h" indicative of user data, while the SDID stores "1EFh" or "2EEh". The two IDs exist in the SDID because there are "1FFh" indicating that the packet is an audio control packet for audio data on channels 1 to 4, stored in the audio data area, and "2EEh" indicating that the packet is an audio control packet for audio data on channels 5 to 8, stored in the audio data area.

The Data count stores "20Bh" composed of "0Bh (= 11words)" being a number of words from AF (UDW0) to RSRV (UDW9-10) and "2 ("10" in the binary notation) being a hexadecimal notation of an even parity and its inverted bit of the "20Bh". The value "20Bh" is determined following the same procedure as for the Data count in the aforementioned audio data.

The AF (UDW0) stores a value of audio frame umber. The audio frame number is to indicate a sequence of video frames. When the number of audio samples is not any integer in one frame, the audio frame number indicates the order of an audio frame in all video frames. For example, the number of samples per frame of an NTSC signal (of 29.97 frames per sec) of audio data sampled at a sampling frequency of 48 kHz is 48000/29.97 = 1601.6. At this time, since it is necessary to insert a plurality of samples in each video frame, 1602 audio samples are assigned to a first video frame, 1601 audio samples are assigned to a second video frame, 1602 audio samples are assigned to a third video frame, 1601 audio samples are assigned to a fourth video frame, and 1602 audio samples are assigned to a fifth video frame. This is because a sequence of audio samples is formed in units of 5 frames since the five frames include 8008 audio samples (1601.6 x 5). In this case, a sequence number stored in the AF (UDW0) being "1" is a sound corresponding to one frame in the 5-frame sequence and it indicates that the number of audio samples is 1602. Since one sequence includes five video frames, when the sequence number is "5", a next sequence number will be "1" again.

The RATE (UDW1) stores a sampling frequency used for sampling audio data. In this case, the RATE (UDW1) stores a code previously defined using three bits. For example, "000" indicates 48.0 kHz, "001" indicates 44.1 kHz, and "010" indicates 32 kHz.

The ACT (UDW2) stores a value indicative of an active channel. That is, the ACT (UDW2) stores, at each of four bits, a value corresponding to each of four audio channels. When the channel is active (the channel is used), "1" is set at the bit.

The DEL m-n (UDW3-8) stores a value indicative of a delay of audio data from video data. The delay is a value calculated for each pair of two audio data channels. That is, a delay between channels 1 and 2 is expressed with 26 bits using 3 words. In this embodiment, since there are four audio channels, the DEL m-n (UDW3-8) uses 6 words (ninth to fourteenth words).

The RSRV (UDW9-10) is a reserved area in which an area for two words is available.

The LTC (longitudinal time code) is a time code which is recorded longitudinally ion a video tape. According to the standard NTSC 525, the LTC is stored in the line 15 of the lines 1 to 525. According to the PAL 625 standard, the LTC is stored in the line 11 of the lines 1 to 625. The LTC consists of a 3-word ADF, 1-word DID, 1-word DBN, 1-word Data count, 16-word UDW 0-15, and a 1-word Check sum as shown in FIG. 9.

The 3-word ADF stores "000h", "3FFh" and "3FFh" as having been described in the above, and the DID stores "2F5h" indicating a packet in which the time code in the LTC is stored.

Also, the DBN stores "200h". In many cases, there exists only one LTC in each frame, and so no number is assigned to the LTC. So the DBN stores "00h". Further, the DBN finally stores "200h" following the aforementioned procedure for parity computation.

The Data count stores a value indicative of a number of words in the UDW, that is, a value indicative of 16 words. Actually, the Data count stores "110h" following the aforementioned procedure for parity computation.

The UDW0-15 stores a time code in the LTC.

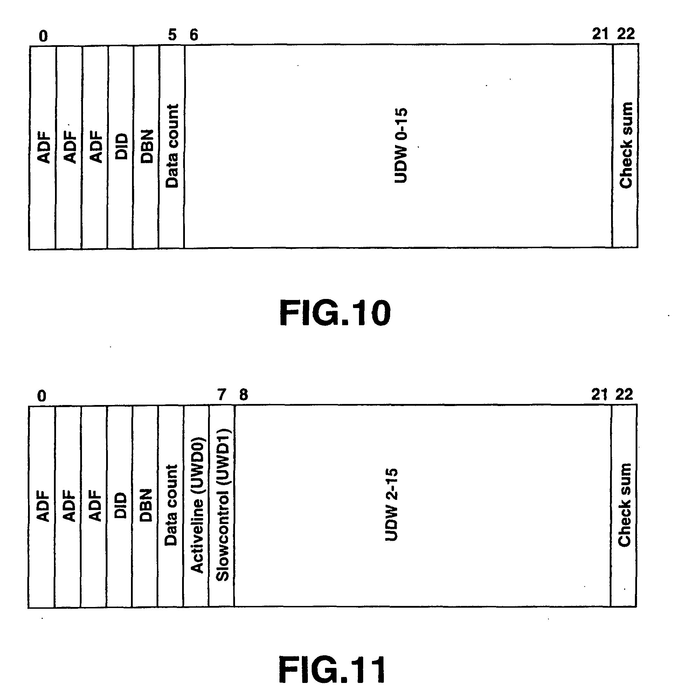

Further, VITC (vertical internal time code) is a time code, but it is recorded along with video data and audio data in a helical line on the video tape. According to the NTSC 252 standard, the VITC is stores in the lines 14 and 277 of the lines 1 to 525. According to the PAL 625 standard, the VITC is stored in the lines 10 and 323 of the lines 1 to 625. As shown in FIG. 10, the VITC consists of a 3-word ADF, 1-word DID, 1-word DBN, 1-word data count (Data count), 16-word UDW 0-15, and a 1-word check sum (Check sum).

The 3-word ADF stores "000h", "3FFh" and "3FFh" as having previously been described, and the DID stores "260h" indicating a packet in which the time code of the VITC is stored.

Also, the DBN stores "260h".

Further, the Data count stores a value indicative of a number of words in the UDW, namely, a value indicating 16 words. Actually, the Data count stores "110h" following the aforementioned procedure for parity computation.

Further, the UDW0-15 actually stores a time code of the VITC.

Moreover, active line and slow playback control data indicate active line data and slow playback control data, respectively. The active line data is used to identify all line numbers from 1035 to 1080, while the slow playback control data is used to identify a series of fields of video/audio data during playback at a variable speed.

According to the standard NTSC 525, the active line data and slow playback control data are stored in the lines 12 and 275 of the lines 1 to 525. According to the PAL 625 standard, the active line data and slow playback control data are stored in the lines 8 and 321 of the lines 1 to 625. As shown in FIG. 11, the active line data and slow playback control data consist each of a 3-word ADF, 1-word DID, 1-word SDID, 1-word data count (Data count), 1-word active line data (Active line (UDW0), 1-word slow playback control data (Slow control (UDW1)), 14-word UDW2-15, and a 1-word check sum (Check sum).

The 3-word ADF stores "000h", "3FFh" and "3FFh" as having been described in the above, the DID stores "250h", and SDID stores "102h". The "250h" is a code originally defined as user data, but a combination with the SDID indicates that the data packet is an active line data and slow playback control data.

Also, the Data count stores "110h" determined following the aforementioned procedure for parity computation on the basis of a number of words in a range from the active line data (Active line) to UDW15.

Further, the Active line stores a value indicative of a number of video lines to be transmitted. When the LSB of one word is "0", the Active line indicates 1035 lines of video data. When the LSB is "1", the Active line indicates 1080 lines of video data. In this embodiment, the Active line stores "200h" for the 1035 lines of video data and "101h" for the 1080 lines of video data, each as a code related to the aforementioned procedure for parity computation as well.

Moreover, the UDW2-15 is a reserved area at present and also usable for a change which will possibly be made of the system in future.

The slow playback control data (Slow control) will be described herebelow.

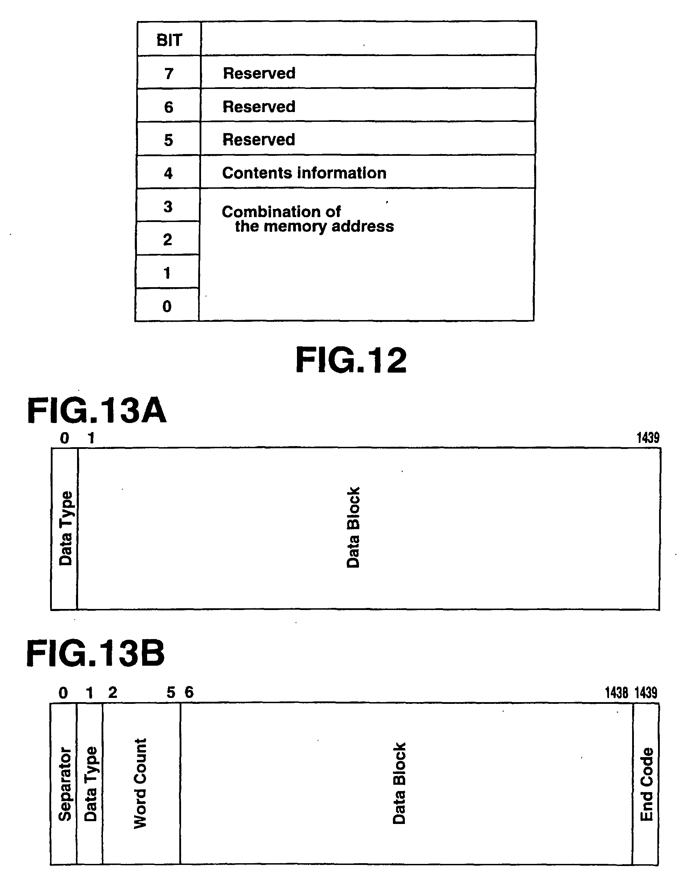

The Slow control (UDW1) has at the 0-th to 3rd bits memory address combination areas in which combinations of memory addresses in the receiver 2 which will further be described later are stored, at the fourth bit a contents information area in which contents information indicating whether the content is of a progressive type or an interlaced type is stored, and at the fifth to seventh bits an extension preliminary data area (Reserved) in which extension preliminary data is stored, as shown in FIG. 12.

Since the memory in the receiver 2 is a ring memory which stores four fields of video/audio data as will further be described later, sequence information indicative of a sequence in which video/audio data are read from four storage areas of the memory are designated in the memory address combination areas each with a combination of addresses corresponding to the storage areas of the memory. More specifically, on the assumption that the addresses of storage areas of the memory in the receiver 2 are AD₀,AD₁, AD₂ and AD₃, respectively, the memory address combination areas store values as shown in Table 1 are stored as the sequence information. Note that in Table 1, (ADₐ, AD_{b}) is a combination of addresses of each storage areas in the memory and after video/audio data is read from the address ADₐ, video/audio data is read from the storage area of the address AD_{b} is read.

**Table 1**

| Values stored in memory address combination areas | |
|---|---|
| Value (hex.) | Combination of addresses of storage areas in memory |
| 0h | (AD₀, AD₀) |
| 1h | (AD₀, AD₁) |
| 2h | (AD₀, AD2) |
| 3h | (AD₀, AD₃) |
| 4h | (AD₁, AD₀) |
| 5h | (AD₁, AD₁) |
| 6h | (AD₁, AD₂) |
| 7h | (AD₁, AD₃) |
| 8h | (AD₂, AD₀) |
| 9h | (AD₂, AD₁) |
| Ah | (AD₂, AD₂) |
| Bh | (AD₂, AD₃) |
| Ch | (AD₃, AD₀) |
| Dh | (AD₃, AD₁) |
| Eh | (AD₃, AD₂) |
| Fh | (AD₃, AD₃) |

Note that since video/audio data is updated one after another in units of a frame in each storage area of the memory in the receiver 2, video/audio data stored in the storage area at the address AD₀ will not be read after video/audio data stored in a storage area at an arbitrary address is read. Thus, "0h", "4h", "8h" and "Ch" in Table 1 are taken as inhibit codes and not used in practice. Even when they are used, no video/audio data will be read.

The contents information area stores a value "1" when the content is of progressive type, and a value "0" when the content is of interlaced type.

Next, the PAD part will be described.

The PAD part stores mainly compressed HDCAM video data. According to the NTSC 525 standard, the PAD part stores video data in each of the lines 50 to 261 of the lines 1 to 525 in a first field being an odd field for example, and in each of the lines 313 to 524 in a second field being an even field for example. Also, according to the PAL 625 standard, the PAD part stores video data in each of the lines 59 to 270 of the lines 1 to 625 in the first field being an odd field for example, and in each of the lines 372 to 589 of the lines 1 to 625 in the second field being an even field for example.

Video data stored in the PAD part has a structure as shown in FIG. 13. FIG. 13A shows the structure of fixed-length video data, and FIG. 13B shows the structure of variable-length video data.

Generally, HDCAM signal is a video signal compressed by variable-length coding, and so it is stored in the PAD part in a configuration as shown in FIG. 13B.

In the PAD part, fixed-length video data consists of a 1-word data type (Data type), and a 1439-word data block (Data block) as shown in FIG. 13A. Note that FIG. 13A shows the data which is transferred at a rate of 270 Mbps. When the transfer rate is 360 Mbps, the PAD part is composed of a total of 1920 words.

The Data type stores a value resulted from encoding of the block size of data stored in the Data block. For example, when a value "01h" is stored in the Data type, the block size is 1438 words. When a value "02h" is stored in the Data type, the block size is 719 words.

In the Data block, there is available a word area for a data size indicated by a value stored in the Data type, and in which video data is actually stored. Note that of the Data block, the last area of two words is available for storage of the CRC for the entire PAD part.

On the other hand, when the video data has a variable length, the PAD part consists of a 1-word separator (Separator), 1-word data type (Data type), 4-word word count (Word count), 1433-word data block (Data block), and a 1-word end code (End code) as shown in FIG. 13B.

The Separator stores a code indicating a separation code for the entire data block as shown in FIG. 13B. The data structure shown in FIG. 13B is formed over a plurality of lines in some cases, and so it cannot be known where one data block begins (or ends). To avoid this, the Separator is provided in the PAD part to enable separation of blocks from each other.

The Data type stores a code indicative of the type of data included in the Data block. In this embodiment, since the Data block stores HDCAM signal, the Data type stores "248h" indicative the HDCAM signal. Note that when the Data type stores "102h", the Data block stores data conforming to MPEG (Moving Picture Experts Group) 4:2:2 MP@ML (main profile at main level) and when the Data type stores "241h", the Data block stores so-called DV (digital video) CAM signal.

The Word count stores a umber of words in the Data block.

The Data block stores video data in practice. In this embodiment, the Data block stores HDCAM signal.

The End code stores an end code.

Note that in the PAD part, CRC code for the entire PAD part is stored in the last area of two words including the End code as the case may be.

As having been described in the foregoing, the SDTI format in which the HDCAM signal is transmitted is defined. In the data transmission/reception system, SDTI data including HDCAM signal is transmitted and received between the A/V server 1 and receiver 2 through the transfer cable 3 and router (not shown).

The A/V server 1 and receiver 2 will further be described herebelow.

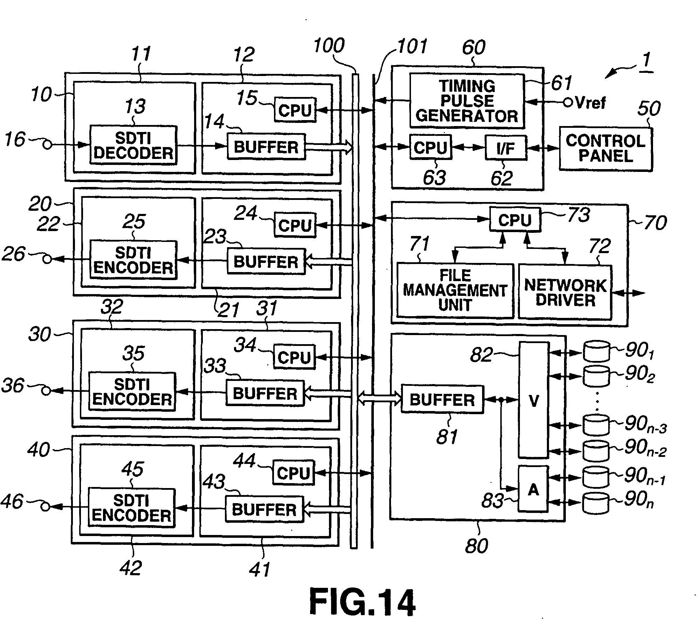

Referring now to FIG. 14, there is illustrated in the form of a block diagram the A/V server 1 in the data transmission/reception system according to the present invention, showing the internal construction of the A/V server 1. As shown in FIG. 14, the A/V server 1 is comprised of a recording port 10 being an input processor, playback ports 20,30 and 40 being each an output processor, control panel 50, timing manager 60, file manager 70, and an HDD array 80 including a plurality of HDDs (hard disc drive) 90₁, 90₂, ..., 90ₙ₋₃, 90ₙ₋₂, 90ₙ₋₁ and 90ₙ (n is an arbitrary integer) being each a recording medium. Further, the A/V server 1 includes a data bus 100 for transfer of data among the recording port 10, playback ports 20, 30 and 40 and the HDD array 80, and a control bus 101 for transfer of a control signal intended to control each of the above components. As in the above, the A/V server 1 has one input processor and three output processors and has thus four systems of input/output processing.

The recording port 10 functions as an input processor to process an input signal from an input terminal 16 for recording to the HDD array 80. The recording port 10 consists of a data input/output unit 11 and a data management unit 12. The data input/output unit 11 has an SDTI decoder 13, and the data management unit 12 has a buffer 14 and a CPU 15.

The SDTI decoder 13 in the data input/output unit 11 separates and extracts, from an SDTI data supplied from the input terminal 16 and serial-parallel converted by a receiving unit (not shown), compressed video/audio data being an HDCAM signal and auxiliary data etc. stored in the ancillary data (ANC) part. More particularly, the SDTI decoder 13 supplies, to the buffer 14 in the data management unit 12 provided downstream of the SDTI decoder 13, the compressed video data stored in the PAD part of the SDTI data and audio data stored in the ANC part of the SDTI data, and supplies, to a controller (now shown), other auxiliary data etc. stored in the ANC part of the SDTI data.

The buffer 14 in the data management unit 12 is provided to provisionally store various data supplied from the SDTI decoder 13, make a time-division multiplexing of the data for example and deliver the time-division multiplexed data to the data bus 100. The buffer is adapted to hold individually each data supplied from the SDTI decoder 13. The buffer 14 is supplied with various data from the SDTI decoder 13 whenever necessary, which is not shown. When a time slot from a time slot generation circuit (not shown) is assigned to the CPU 15, the buffer 14 delivers buffered data to the data bus 100 under the control of the CPU 15.

The data bus 100 is a one called "SBX (spydar bus extension) bus", and it consists of an upward bus (not shown) over which data is transmitted only in a direction for data recording and a downward bus (also not shown) over which data is transmitted only in a direction for data playback. Each of these upward and downward buses is composed of a plurality of buses over which various data having been serial-parallel converted by a serial-parallel converter (not shown) are transmitted individually. Each data delivered from the buffer 114 is transmitted to the HDD array 80 through the buses forming together the data bus 100 and corresponding to the data. There is also provided downstream of the buffer 14 a bus output processor (not shown) by which each data supplied from the buffer 14 has piggybacked thereon a command etc. for instruction write to HDD 90₁, 90₂, ..., 90ₙ₋₃, 90ₙ₋₂, 90ₙ₋₁ or 90ₙ for example so that the data conforms to the transmission format of the data bus 100.

The CPU 15 controls each components of the recording port 10 on the basis of control signals such as an external command etc. sent from the control panel 50 which will further be described later for example through the control bus 101. Also, the CPU 15 controls output of buffered data from the buffer 14 on the basis of a time slot assigned by the time slot generation circuit.

Such a recording port 10 can be supplied with video data and audio data on four or eight channels.

The playback port 20 works as an output processor to process data recorded in the HDD array 80 for delivery to outside. It consists of a data management unit 21 and data input/output unit 22. The data management unit 21 has a buffer 23 and a CPU 24, and the data input/output unit 22 has an SDTI encoder 25 to generate data.

The buffer 23 in the data management unit 21 buffers various data sent in parallel from the HDD array 80 through the data bus 100. The buffer 23 is constructed to hold the data sent in parallel from the HDD array 80 on the individual basis, which is not illustrated. When the CPU 24 is assigned a time slot from the time slot generation circuit, the buffer 23 is supplied with data read from the HDD array 80 under the control of the CPU 24.

Each data sent from the HDD array 80 has superimposed thereon a status for a command for write to the aforementioned HDDs 90₁, 90₂, ..., 909n-3, 90ₙ₋₂, 90ₙ₋₁ and 90ₙ for example so that the data conforms to the transmission format of the data bus 100. Such a data is divided, for transmission, by the plurality of buses forming together the downward bus of the aforementioned data bus 100. Thus, it can be considered that in the A/V server 1, there is less factors to cause an error such as collision of data in the input system with data in the output system and data can simultaneously be recorded and played back by transmitting the data based on their assigned time slots. The data supplied to the buffer 23 are buffered by the buffer 23 and then supplied to the SDTI encoder 25 in the data input/output unit 22 provided downstream of the buffer 23.

The CPU 24 controls each component of the playback port 20 on the basis of control signals such as external command etc. sent through the control bus 101. Also, the CPU 24 acquires the right of using the data bus 100 on the basis of the time slot assigned by the time slot generation circuit to provide a control for input of data to the buffer 23.

The SDTI encoder 25 in the data input/output unit 22 converts, to SDTI data, video/audio data being an HDCAM signal delivered from the buffer 23, parallel-serial converted by a parallel-serial converter (not shown) and then supplied thereto. At this time, the SDTI encoder 25 stores, in the ANC part, the aforementioned auxiliary data etc. generated by the controller (not shown) and supplied thereto The SDTI data generated by the SDTI encoder 25 is subjected to parallel-serial conversion by a transmitting unit (not shown) and supplied to an output terminal 26.

Such a playback port 20 can provide video data and audio data on four or eight channels.

The playback ports 30 and 40 are similarly constructed to the playback port 20.

That is to say, the playback port 30 consists of a data management unit 31 and a data input/output unit 32. The data management unit 31 includes a buffer 33 which provisionally stores data from the HDD array 80, and a CPU 34 which controls each component of the playback port 30. Also, the data input/output unit 32 has an SDTI encoder 35 which converts, to SDTI data, video/audio data being an HDCAM signal delivered from the buffer 33, parallel-serial converted by the parallel-serial converter (not shown) and supplied thereto, and supplies the SDTI data to an output terminal 36 through a transmitting unit (not shown).

On the other hand, the playback port 40 is comprised of a data management unit 41 and a data input/output unit 42. The data management unit 41 includes a buffer 43 which provisionally stores data from the HDD array 80, and a CPU 44 which controls each component of the playback port 40. Also, the data input/output unit 42 has an SDTI encoder 45 which converts, to SDTI data, video/audio data being an HDCAM signal delivered from the buffer 43, parallel-serial converted by the parallel-serial converter (not shown) and supplied thereto, and supplies the SDTI data to an output terminal 46 through a transmitting unit (not shown).

The control panel 50 is provided with a variety of switches operated by the user to select data to be edited, a port at which data is inputted or outputted, etc., a display unit on which image etc. used in edition are displayed; etc. When operated by the user, the control panel 50 generates a corresponding control signal to an intended purpose. More particularly, when at the control panel 50, the user selects the recording port 10, playback port 20, 30 or 40, a VTR (video tape recorder) connected to the system or the like by operating the corresponding switches, the control panel 50 provides a control signal to a select port or VTR. The control signal is sent to the control bus 101 via the timing manager 60 which will further be described below, and transmitted over the control bus 101 to the CPU of the port. The port or VTR having received the control signal operates correspondingly to the content of the control signal.

The timing manger 60 manages the data bus 100 at an appropriate time based on a video sync signal. The timing manages includes a timing pulse generator 61, interface (I/F) 62 interfacing with the control panel 50, and a CPU 63 which controls each component of the timing manager 60. Based on a video sync signal supplied from outside, the CPU 63 controls the timing pulse generator 61 to generate a timing pulse and send it to the control bus 101. The timing manager 60 manages the data bus 100 according to the timing pulse.

The file manager 70 is comprised of a file management unit 71 which holds fine management information indicative of recording areas of files in the HDDs 90₁, 90₂, ..., 90ₙ₋₃, 90ₙ₋₂, 90ₙ₋₁ and 90ₙ which will further be described later and manages files based on the file management information, a network driver 72 connected to an external network such as Ethernet or the like to supply or receive data to or from the external network, and a CPU 73 which controls each component of the file manager. The file manager 70 is controlled by the CPU 73 to manage data recorded in the HDD array 80 which will further be described below. For example, when a file is recorded to the HDD 90₁, 90₂, ..., 90ₙ₋₃, 90ₙ₋₂, 90ₙ₋₁ or 90n, the file manager 70 manages the data recorded in the HDD array 80 by the use of information indicative of which address the file is recorded at in the HDD 90₁, 90₂, ..., 90ₙ₋₃, 90ₙ₋₂, 90ₙ₋₁ or 90ₙ.

The HDD array 80 stores and manages a variety of data. The HDD array 80 is connected to the plurality of HDD 90₁, 90₂, ..., 90ₙ₋₃, 90ₙ₋₂, 90ₙ₋₁ and 90ₙ, stores a variety of data to these HDDs and manages data recorded in these HDDs. The HDD array 80 consists of a buffer 81, video data write/read unit (V) 82, and a audio data write/read unit (A) 83.

The buffer 81 provisionally stores data which is to be transferred to or from the data bus 100. For example, data from the HDD 90₁, 90₂, ..., 90ₙ₋₃, 90ₙ₋₂, 90ₙ₋₁ or 90ₙ is buffered in the buffer 81 and thereafter delivered to the data bus 100.

The video data write/read unit 82 writes and reads video data to and from the HDDs 90₁, 90₂,..., 90ₙ₋₃, 90ₙ₋₂, 90ₙ₋₁ or 90ₙ. More specifically, this unit selects a desired one of the HDDs 90₁, 90₂, ..., 90ₙ₋₃ and 90ₙ₋₂, writes video data supplied from the buffer 81, and reads audio data from the desired HDD and supplies it to the buffer 81.

The audio data write/read unit 83 writes and reads audio data to and from the HDDs 90_{1and} 90₂. More specifically, this unit selects any one of the HDDs 90₁ and 90₂ and writes audio data supplied from the buffer 81, and reads audio data from a desired HDD and supplies it to the buffer 81.

The HDD array 80 is adapted to have such a redundancy that data to be recorded for broadcasting service can be recorded positively and recorded data can be played back positively. Namely, it has the so-called RAID (redundant arrays of inexpensive disks) construction. The HDDs 90₁, 90₂, ..., 90ₙ₋₃ and 90ₙ₋₂ have a RAID-3 construction, namely, they can transfer data with an improved performance by dividing the data correspondingly to the plurality of discs. In addition, they have a parity disc. The HDDs 90ₙ₋₁ and 90ₙ have a RAID-1 construction called "mirror disc" to effect a so-called dual-writing of data.

The A/V server 1 can include an edition unit etc. for intensive edition of data such as video effector which makes a special effect processing of data, as necessary, in addition to the aforementioned components.

The A/V server 1 constructed as in the above records external data as will be described below:

In the A/V server 1, SDTI data supplied to the input terminal 16 is buffered into the buffer 14 in the data management unit 12 via the SDTI decoder 13 in the data input/output unit 11 in the recording port 10. The buffered data in the butter 14 is delivered to the data bus 100 for a time slot period assigned by the time slot generation circuit to the CPU 15 and transferred to the HDD array 80.

The data having been transferred to the HDD array 80 is buffered into the buffer 81 and then read out from there. Of the data read out from the buffer 81, video data is supplied to the video data write/read processor 82 while audio data is supplied to the audio data write/read processor 83. The video data write/read unit 82 divides supplied video data in a predetermined unit and acquires parity data, and records the divided data and parity data to the HDDs 90₁, 90₂,..., 90ₙ₋₃ and 90ₙ₋₂. The audio data write/read unit 83 records supplied audio data to the two HDD 90ₙ₋₁, and 90ₙ.

The A/V server 1 can record external data to the HDD array 80 by effecting the above-mentioned operations.

On the other hand, the A/V server 1 plays back data recorded in the HDDs 90₁, 90₂, ..., 90ₙ₋₃, 90ₙ₋₂, 90ₙ₋₁ and 90ₙ as in the following, and delivers the data to outside.

That is, in the A/V server 1, any one of the playback ports 20, 30 and 40 accesses the HDD array 80 for a time slot period assigned by the time slot generation circuit and requests the HDD array 80 to play back data. In the HDD array 80, the video data write/read unit 82 reads the divided data and parity data from the HDDs 90₁, 90₂,..., 90ₙ₋₃ and 90ₙ₋₂, combines the divided data together, and detects an error and corrects the error based on the parity data, thereby playing back the video data. Also, the audio data write/read unit 83 plays back the audio data from an error-free one of the HDDs 90ₙ₋₁ and 90ₙ. The video/audio data thus played back is transferred trough the data bus 100 to the one of the playback ports that has requested for the data playback.

It is assumed herein that the playback port 20 for example that requests the HDD array 80 to play back the data. The data delivered from the HDD array 80 is supplied through the data bus 100 to the buffer 23 provided in the data management unit 21. The data supplied to the buffer 23 is buffered there, and then encoded to SDTI data by the SDTI encoder 25 in the data input/output unit 22. Then, the data is supplied to the output terminal 26 and delivered to outside.

Thus, the A/V server 1 plays back internal material and provides the material thus played back material to outside.

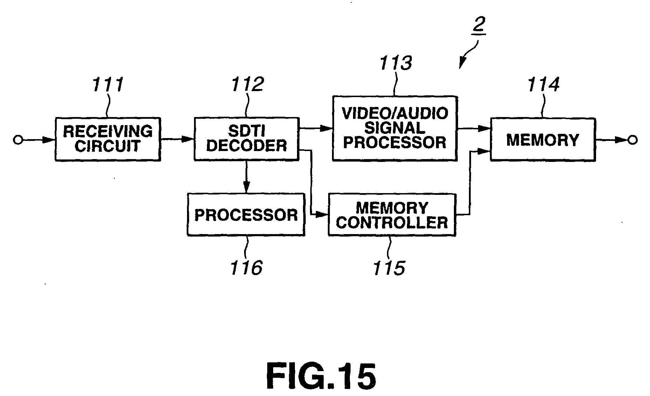

Referring now to FIG. 15, there is illustrated in the form of a block diagram the receiver 2 in the data transmission/reception system according to the present invention, showing the internal construction of the receiver 2. Note that the receiver 2 may be a similar apparatus to the A/V server 1 having been described in the foregoing but it is assumed in the following description that the receiver 2 is an apparatus which has only functions to decode and play back the received SDTI data.

As shown in FIG. 15, the receiver 2 includes a receiving unit 111 which receives the SDTI data sent from the A/V server 1 through the transfer cable 3 and a router (not shown), an SDTI decoder 112 which separates and extracts, from the received SDTI data, compressed video/audio data being HDCAM signal and auxiliary data stored in the ANC part, etc., a video/audio data processor 113 which expands and otherwise processes the compressed video/audio data being HDCAM signal, a memory 114 which consecutively stores the video/audio data, a memory controller 115 being a data reading controlling means to control the memory 114, and a controller 116 which controls these components of the receiver 2.

The receiving unit 111 receives the SDTI data sent from the A/V server 1 through the transfer cable 3 and router (not shown), and converts the data from serial to parallel. The receiving unit 111 supplies each data as a result of the serial-parallel conversion to the SDTI decoder 112 provided downstream thereof.

The SDTI decoder 112 separates and extracts, from the SDTI data supplied from the receiving unit 111, compressed video/audio data being HDCAM signal and auxiliary data stored in the ANC part, etc. More specifically, the SDTI decoder 112 supplies the compressed video data stored in the PAD part of the SDTI data and the audio data in the ANC part to the video/audio data processor 113 provided downstream thereof. Also, the SDTI decoder 112 supplies the aforementioned active line and slow playback control data, of the auxiliary data, stored in the ANC part to the memory controller 115. Further, the SDTI decoder 112 supplies other auxiliary data etc. stored in the ANC part to the controller 116 provided downstream thereof.

The video/audio data processor 113 expands the compressed video/audio data being the HDCAM signal supplied from the SDTI decoder 112 to provide a base-band signal or a signal having a configuration similar to that of the base-band signal. The video/audio data processor 113 supplies the video/audio data thus obtained to the memory 114 provided downstream thereof.

The memory 114 consecutively stores the video/audio data in units of a frame. It consists of a plurality of storage areas so that video/audio data for a plurality of fields can be held in each field. Note that in the following description it is assumed that the memory 114 is a four-bank ring memory so that it can hold four fields of video/audio data. The memory 114 consecutively stores the video/audio data supplied in units of a frame from the video/audio data processor 113 to a predetermined storage area at each field. Also, the video/audio data stored in the memory 114 is read out of each storage area for delivery under the control of th memory controller 115.

The memory controller 115 works as will be described in detail later, but it controls the memory 114 based on the active line and slow playback control data supplied from the SDTI decoder 112, that is, controls the video/audio data reading from each storage area in the memory 114.

The controller 116 controls the operation of each component of the receiver 2 based on the auxiliary data such as header data etc. supplied from the SDTI decoder 112.

In the receiver 2 constructed as in the above, the receiving unit 111 receives SDTI data sent from the A/V server through the transfer cable 3 and router (not shown), and the SDTI decoder 112 separates and extracts, from each data obtained by the serial-parallel conversion, compressed video/audio data being HDCAM signal and auxiliary data etc. stored in the ANC part.

Next, in the receiver 2, the video/audio data processor 113 processes the compressed video/audio data being the HDCAM signal in a predetermined manner to provide video/audio data and supplies the video/audio data one after another to the memory 114 in units of a frame.

Then, in the receiver 2, the memory controller 115 controls the reading of video/audio data from the memory 114 on the basis of the active line and slow playback control data, and provides the video/audio data to a monitor or the like (not shown) for example. More specifically, in the receiver 2, the memory controller 115 controls the reading of video/audio data from the memory 114 based on sequence information designate as slow playback control data (UDW1) in the active line and slow playback control data. In the receiver 2, the video/audio data are read out of the memory 114 in a sequence based on the sequence information under the control of the memory controller 115.

Thus, the receiver 2 can reproduce the SDTI data received from the A/V server 1.

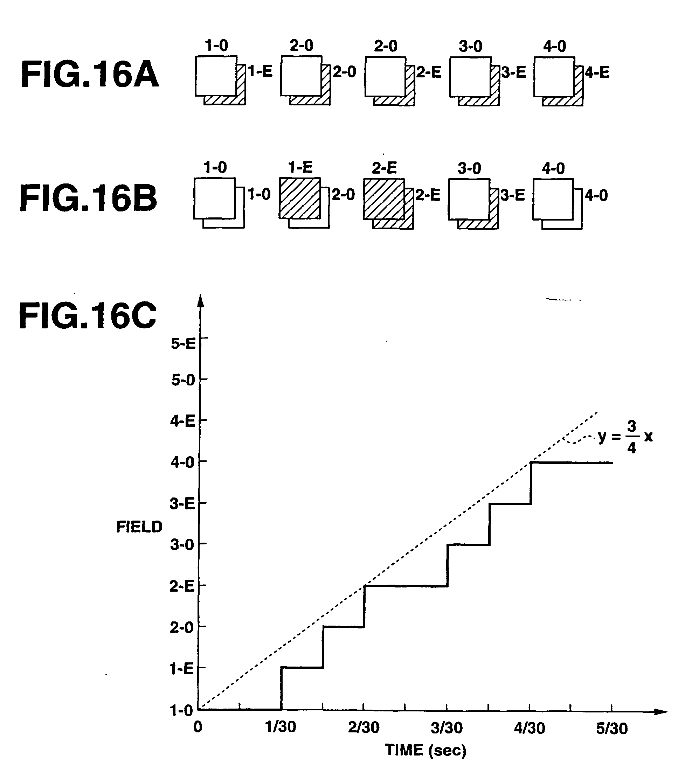

In the data transmission/reception system composed of the A/V server 1 and receiver 2 having been described in the foregoing according to the present invention, the receiver 2 receiving SDTI data sent from the A/V server 1 can control the playback of video/audio data which is effected at a variable speed. The playback at a variable speed will further be described herebelow with reference to FIGS. 16 through 19.

First, the playback at a variable speed in the data transmission/reception system will conceptually be explained concerning transmission by the A/V server 1 of SDTI data storing HDCAM signal which is based on the NTSC 525 standard and slow playback of the video/audio data, for display, by the receiver 2 at three fourths of the normal speed. The explanation will be made herebelow with reference to FIG. 16.

As shown in FIG. 16A, the A/V server 1 transmits HDCAM signal in the SDTI format in units of a frame beginning with the first frame. At this time, the A/V server 1 sends to the receiver 2 active line and slow playback control data generated by the controller (not shown) based on information such as double speed for the variable-speed playback, set by the user operating the control panel 50 etc., as auxiliary data stored in the ANC part. Also, for a slow playback at three fourths of the normal speed, the A/V server 1 transmits four frames of HDCAM signal, obtained by repeating a part of three frames of HDCAM signal, although four different frames of HDCAM signal are to be transmitted for a playback at the normal speed. In this case, however, HDCAM signal being a video/audio data in the second frame is transmitted two times. That is, the A/V server 1 transmits an odd field (1-O) in the first frame, even field (1-E) in the first frame, odd field (2-O) in the second frame, even field (2-E) in the second frame, odd field (2-O) in the second frame, even field (2-E) in the second frame, odd field (3-O) in the third frame and even field (3-E) in the third frame in this order. The A/V server 1 determines a construction of a frame to be transmitted correspondingly to a double speed so that the receiver 2 can make a smoothest slow playback of the HDCAM signal.

Thus, the receiver 2 receives and decodes the HDCAM signal in the SDTI format sent from the A/V server 1, and consecutively stores it in each storage area in the memory 114. Then, in the receiver 2, the memory controller 115 delivers, based on the slow playback control data (UDW1) in the active line and slow playback control data (UDW1), the odd field (1-O) in the first frame, odd field (100) in the first frame, even field (1-E) in the first frame, odd field (2-O) in the second frame, even field (2-E) in the second frame, even field (20E) in the second frame, odd field (3-O) in the third frame and even field (3-E) in the third frame in this order to the monitor at every 1/60 sec as shown in FIG. 16B.

As the result, an image played back and displayed on the monitor will be updated having the number of fields thereof simply increased as the time elapses as shown in FIG. 16C. Also, the image played back and displayed on the monitor will be updated having the number of fields thereof simply increased, as the time elapses, most precisely along a straight line of y = 3/4x in which a double speed is taken as a proportion constant, depicted in relation to a vertical axis y and vertical axis x as shown in FIG. 16C.

Thus, in the data transmission/reception system, the receiver 2 can play back video/audio data received from the A/V server 1 at a slow speed and display it on the monitor without any distortion.

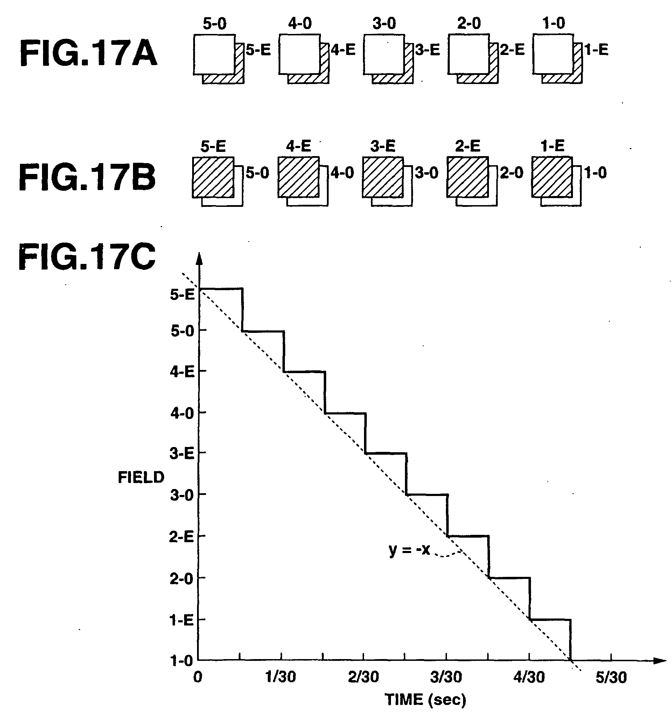

Further, the playback at a variable speed will be explained concerning transmission by the A/V server 1 of SDTI data including HDCAM signal which is based on he NTSC 525 standard, reverse playback of video/audio data by the receiver 2 and display of the data on the monitor with reference to FIG. 17.

For reverse playback of HDCAM signal for the first to fifth frames for example, the A/V server 1 transmits HDCAM signal in the SDTI format in units of a frame consecutively beginning with the fifth frame as shown in FIG. 17A. That is, the A/V server 1 transmits odd field (5-O) in the fifth frame, even field (5-E) in the fifth frame, odd field (4-O) in the fourth frame, even field (4-E) in the fourth frame, odd frame (3-O) in the third frame, even field (3-E) in the third frame, odd field (2-O) in the second frame, even field (2-E) in the second frame, odd field (1-O) in the first frame and even field (1-E) in the first frame in this order. At this time, the A/V server 1 transmits to the receiver 2 active line and slow playback control data generated by the controller (not shown) as auxiliary data stored in the ANC part.

Thus, the receiver 2 consecutively receives and decodes the HDCAM signal in the SDTI format sent from the A/V server 1 in units of a frame, and consecutively stores the signal into each storage area of the memory 114. Then, in the receiver 2, the receiver 2 provides, based on sequence information designated in the slow playback control data (UDW1) in the active line and slow playback control data, even field (5-E) in the fifth frame, odd field (5-O) in the fifth frame, even field (4-E) in the fourth frame, odd field (4-O) in the fourth frame, even frame (3-E) in the third frame, odd field (3-O) in the third frame, even field (2-E) in the second frame, odd field (2-O) in the second frame, even field (1-E) in the first frame and odd field (1-O) in the first frame in this order to the monitor at every 1/6 sec, as shown in FIG. 17B.

As the result, an image played back and displayed on the monitor will be updated having the number of fields thereof simply increased as the time elapses as shown in FIG. 17C. Also, the image played back and displayed on the monitor will be updated having the number of fields thereof simply increased, as the time elapses, most precisely along a straight line of y = -x in which a double speed is taken as a proportion constant, depicted in relation to a vertical axis y and vertical axis x as shown in FIG. 17C.

Thus, in the data transmission/reception system, the receiver 2 can make reverse playback of video/audio data received from the A/V server 1 at a slow speed and display it on the monitor without any distortion.

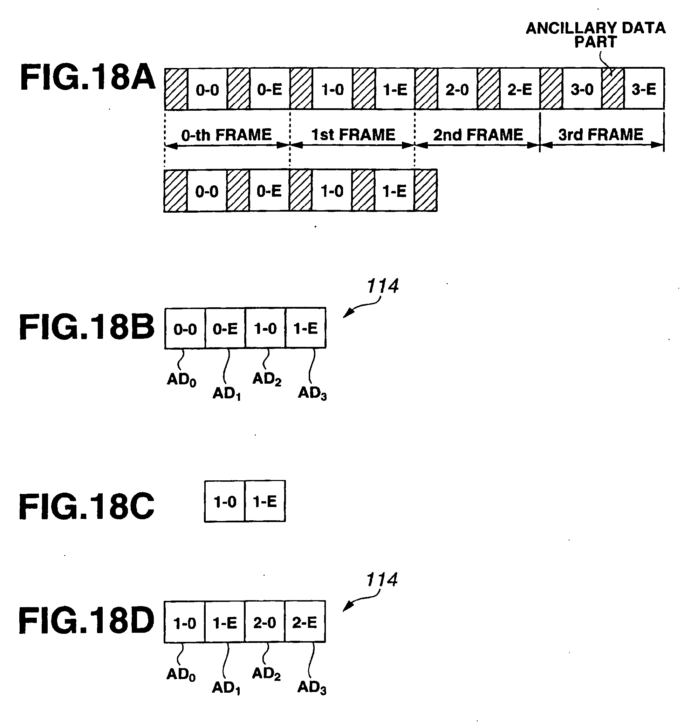

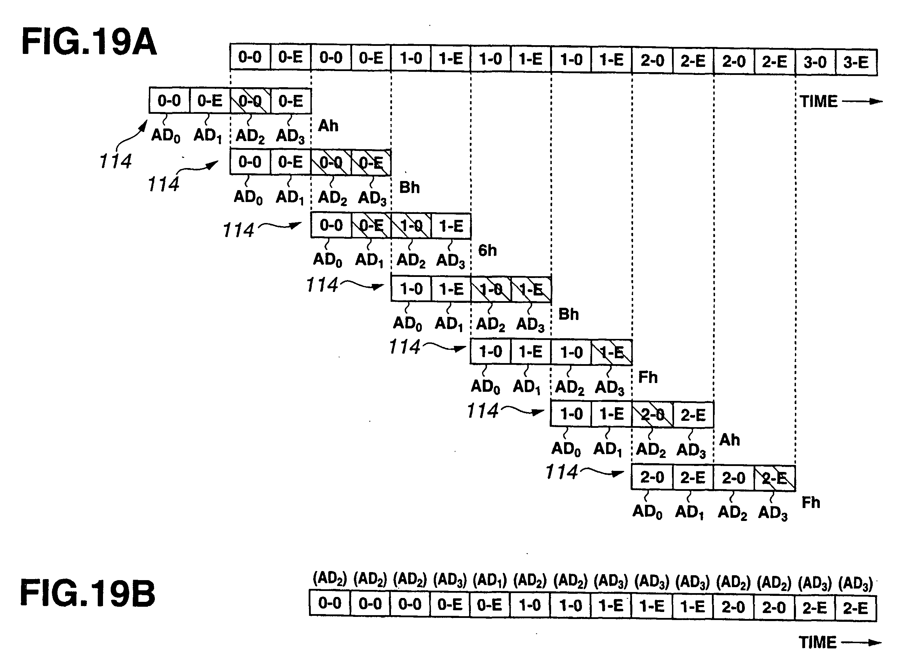

In the data transmission/reception system according to the present invention, the receiver 2 receivers SDTI data having stored therein HDCAM signal transmitted from the A/V server 1 and holds it in each storage area of the memory 114 and video/audio data is read from the memory 114 on the basis of the active line and slow playback control data, as will be described herebelow with reference to FIGS. 18 and 19.

As shown at the upper stage of FIG. 18A, the A/V server 1 transmits SDTI data having HDCAM signal stored therein in units of a frame. As having previously been described in the foregoing, the SDTI data has the ANC (ancillary data) part in which auxiliary data including the active line and slow playback control data are stored.

As shown at the lower stage of FIG. 18A, the receiver 2 receives the SDTI data having HDCAM signal stored therein, transmitted in units of a frame from the A/V server 1, and stores four fields of video/audio data into the memory 114 at each field as shown in FIG. 18B. In the receiver 2, the memory controller 115 determines as a next frame two fields which are to be delivered from the memory 114 based on sequence information designated in the active line and slow playback control data (UDW1) stored in the ANC part suffixed to four fields of video/audio data stored in the memory 114, that is, in the ANC part after an even field (1-E) in the first frame at the lower stage of FIG. 18A.

When the sequence information is "Bh", it designates that video/audio data stored in a storage area at an address AD₂ should be read and then video/audio data stored in a storage area at an address AD₃ should be read. So, in the receiver 2, an odd field (1-O) in the first frame stored in the storage area at the address AD₂ and even field (1-E) in the first frame stored in the storage area at the address AD₃ are read out one after another under the control of the memory controller 115 as shown in FIG. 18C.

Then in the receiver 2, an odd field (0-O) in the 0-th frame and odd field (0-E) in the 0-th frame are deleted from the memory 114, an odd field (1-O) in the first frame.is stored into a storage area at an address AD₀ and even field (1-E) in the first frame is stored into a storage area at an address AD₁, an odd field (2-O) in the second frame being a next frame and even field (2-E) in the second frame are stored into storage areas at the addresses AD₂ and AD₃, respectively, and a field to be read out is determined based on the sequence information, as shown in FIG. 18D.

As in the above, in the data transmission/reception system according to the present invention, the receiver 2 can receive the SDTI data including HDCAM signal, transmitted from the A/V server 1, consecutively store the data into each storage area of the memory 114, and control the reading of video/audio data from the memory 114 on the basis of the sequence information designated in the active line and slow playback control data (UDW1). Thus, in the data transmission/reception system, data can be smoothly played back at a variable speed as shown in FIGS. 16 and 17.

The reading of video/audio data from the memory 114 in the data transmission/reception system will be described herebelow concerning the reading of video/audio data from the memory 114 when the receiver 2 makes a slow playback of video/audio data at three sevenths of the normal speed from SDTI data included in HDCAM signal conforming to the NTSC 525 standard, transmitted from the A/V server 1, with reference to FIG. 19.

As shown at the upper stage of FIG. 19A, the A/V server 1 consecutively transmits SDTI data including HDCAM signal in units of a frame. At this time, the A/V server 1 transmits the SDTI data in such a manner that the receiver 2 can make the most smooth slow playback of the data, that is, video/audio data provided from the receiver 2 can be played back so as to most precisely meet a relation y = 3/7x in which a double speed is taken as a proportion constant. More specifically, the A/V server 1 transmits the 0-th frame repeatedly two times, the first frame repeatedly three times, and the second frame repeatedly two times, thereby transmitting the seven frames including three frames of SDTI data.

Thus, the receiver 2 first stores the first four fields of video/audio data consecutively into each storage area in the memory 114 as shown in the first one of the seven stages except for the top one in FIG. 19A. That is, the receiver 2 stores an odd field (0-O) in the 0-th frame, even field (0-E) in the 0-th frame, odd field (0-O) in the 0-th frame and even field (0-E) in the 0-th frame into storage areas at addresses AD₀, AD₁, AD₂ and AD₃, respectively.

Then in the receiver 2, since the sequence information designated in the active line and slow playback control data (UDW1) stored in the ANC part suffixed to the even field (0-E) in the 0-th frames stored in the storage area at the address AD₃ is "Ah", the odd field (0-O) in the 0-th frame stored in the storage area at the address AD₂, as shown hatched in the first one of the seven stages except for the top stage in FIG. 19A is read out of the memory 114 under the control of the memory controller 115.

Next in the receiver 2, next two fields of video/audio data are consecutively stored into each storage area in the memory 114 as shown at the second one of the seven stages except for the top stage in FIG. 19A. That is, in the receiver 2, the odd field (0-O) in the 0-th frame and even field (0-E) in the 0-th frame stored in the storage areas at addresses AD₀ and AD₁, respectively, are deleted from the memory 114, and odd field (0-O) in the 0-th frame and even field (0-E) in the 0-th frame stored in the storage areas at addresses AD₂ and AD₃, respectively, are stored into the storage areas at addresses AD₀ and AD₁, respectively. Further, in the receiver 2, odd field (0-O) in the 0-th frame being a next frame and even field (0-E) in the 0-th frame are stored into the storage areas at addresses AD₂ and AD₃, respectively.

Since the sequence information designated after the even field (0-E) in the 0-th frame stored in the storage area at the address AD₃ is "Bh", the receiver 2 consecutively provides the odd field (0-O) in the 0-th frame stored in the storage area at the address AD₂ and even field (0-E) in the 0-th frame stored in the storage area at the address AD₃, as shown hatched in the second one of the seven stages except for the top stage in FIG. 19A under the control of the memory controller 115.

Next in the receiver 2, next two fields of video/audio data are stored one after the other into each storage area in the memory 114 as shown at the third one of the seven stages except for the top stage in FIG. 19A. That is, in the receiver 2, the odd field (0-O) in the 0-th frame and even field (0-E) in the 0-th frame, stored in the storage areas at the addresses AD₀ and AD₁, respectively, are deleted from the memory 114, and odd field (0-O) in the 0-th frame and even field (0-E) in the 0-th frame, stored in the storage areas at the addresses AD₂ and AD₃, respectively, are stored into the storage areas at the addresses AD₀ and AD₁, respectively. Further in the receiver 2, odd field (1-O) in the first frame being a next frame and even field (1-E) in the first frame are stored into the storage areas at the addresses AD₂ and AD₃, respectively.

Since the sequence information designated after the even field (1-E) in the first frame stored in the storage area at the address AD₃ is "6h", the receiver 2 consecutively provides the even field (0-E) in the 0-th frame stored in the storage area at the address AD₁ and odd field (1-O) in the first frame stored in the storage area at the address AD₂, as shown hatched in the third one of the seven stages except for the top stage in FIG. 19A under the control of the memory controller 115.

Next in the receiver 2, next two fields of video/audio data are stored one after the other into each storage area in the memory 114 as shown at the fourth one of the seven stages except for the top stage in FIG. 19A. That is, in the receiver 2, the odd field (0-O) in the 0-th frame and even field (0-E) in the 0-th frame, stored in the storage areas at the addresses AD₀ and AD₁, respectively, are deleted from the memory 114, and odd field (1-O) in the first frame and even field (1-E) in the first frame, stored in the storage areas at the addresses AD₂ and AD₃, respectively, are stored into the storage areas at the addresses AD₀ and AD₁, respectively. Further in the receiver 2, odd field (1-O) in the first frame being a next frame and even field (1-E) in the first frame are stored into the storage areas at the addresses AD₂ and AD₃, respectively.

Since the sequence information designated after the even field (1-E) in the first frame stored in the storage area at the address AD₃ is "Bh", the receiver 2 consecutively provides the odd field (1-O) in the first frame stored in the storage area at the address AD₂ and even field (1-E) in the first frame stored in the storage area at the address AD₃, as shown hatched in the fourth one of the seven stages except for the top stage in FIG. 19A under the control of the memory controller 115.

Next in the receiver 2, next two fields of video/audio data are stored one after the other into each storage area in the memory 114 as shown at the fifth one of the seven stages except for the top stage in FIG. 19A. That is, in the receiver 2, the odd field (1-O) in the first frame and even field (1-E) in the first frame, stored in the storage areas at the addresses ADo and AD₁, respectively, are deleted from the memory 114, and odd field (1-O) in the first frame and even field (1-E) in the first frame, stored in the storage areas at the addresses AD₂ and AD₃, respectively, are stored into the storage areas at the addresses AD₀ and AD₁, respectively. Further in the receiver 2, odd field (1-O) in the first frame being a next frame and even field (1-E) in the first frame are stored into the storage areas at the addresses AD₂ and AD₃, respectively.

Since the sequence information suffixed to the the even field (1-E) in the first frame stored in the storage area at the address AD₃ is "Fh", the receiver 2 provides twice the even field (1-E) in the first frame stored in the storage area at the address AD₃, as shown in the fifth one of the seven stages except for the top stage in FIG. 19A under the control of the memory controller 115.

Next in the receiver 2, next two fields of video/audio data are stored one after the other into each storage area in the memory 114 as shown at the sixth one of the seven stages except for the top stage in FIG. 19A. That is, in the receiver 2, the odd field (1-O) in the first frame and even field (1-E) in the first frame, stored in the storage areas at the addresses AD₀ and AD₁, respectively, are deleted from the memory 114, and odd field (1-O) in the first frame and even field (1-E) in the first frame, stored in the storage areas at the addresses AD₂ and AD₃, respectively, are stored into the storage areas at the addresses AD₀ and AD₁, respectively. Further in the receiver 2, odd field (2-O) in the second frame being a next frame and even field (2-E) in the second frame are stored into the storage areas at the addresses AD₂ and AD₃, respectively.

Since the sequence information designated after the even field (2-E) in the second frame stored in the storage area at the address AD₃ is "Ah", the receiver 2 provides the odd field (2-O) in the second frame stored in the storage area at the address AD₂, as shown hatched in the sixth one of the seven stages except for the top stage in FIG. 19A under the control of the memory controller 115.

Further in the receiver 2, next two fields of video/audio data are stored one after the other into each storage area in the memory 114 as shown at the seventh one of the seven stages except for the top stage in FIG. 19A. That is, in the receiver 2, the odd field (1-O) in the first frame and even field (1-E) in the first frame, stored in the storage areas at the addresses AD₀ and AD₁, respectively, are deleted from the memory 114, and odd field (2-O) in the second frame and even field (2-E) in the second frame, stored in the storage areas at the addresses AD₂ and AD₃, respectively, are stored into the storage areas at the addresses ADo and AD₁, respectively. Further in the receiver 2, odd field (2-O) in the second frame being a next frame and even field (2-E) in the second frame are stored into the storage areas at the addresses AD₂ and AD₃, respectively.

Since the sequence information designated after the even field (2-E) in the second frame stored in the storage area at the address AD₃ is "Fh", the receiver 2 provides twice the even field (2-E) in the second frame stored in the storage area at the address AD₃, as shown hatched in the seventh one of the seven stages except for the top stage in FIG. 19A under the control of the memory controller 115.

As the result of the above operations, the images played back by the receiver 2 are displayed in an order shown in FIG. 19B, and the fields are simply increased as the time elapses and thus updated.

Thus, in the data transmission/reception system, video/audio data provided from the receiver 2 is updated in units of a fields, and can be slowly played back even at any slow speed (in the mode of variable speed playback).

### Industrial Applicability

As having been described in the foregoing, in the data transmission/reception system, when the A/V server 1 transmits SDTI data including HDCAM signal to the receiver 2, auxiliary data including the active line and slow playback control data intended for controlling the slow playback in the receiver are stored in the ANC (ancillary data) part, and the receiver 2 can effect a smooth slow playback by controlling the memory 114 based on such active line and slow playback control data.

In the data transmission/reception system, since the active line and slow playback control data are stored in the ANC part, the A/V server 1 has only to store only HDCAM signal in the PAD part and thus the receiver 2 has not to make any analysis of data stored in the PAD part. Therefore, the data transmission/reception system according to the present invention can effect a highly advanced video processing.

Note that the present invention is not limited to the embodiment having been described in the foregoing but for example the memory 114 in the receiver 2 has not always to hold four fields of video/audio data. Namely, the memory 114 may hold an arbitrary number of fields or frames of video/audio data and also the memory 114 may not be the ring memory but it may be a one consisting of a plurality of banks for holding each field individually.

The embodiment of the present invention has been described in the foregoing concerning the A/V server 1 as an apparatus to transmit SDTI data and the receiver 2 as an apparatus to receive the SDTI data. However, the present invention is also applicable to an SDTI data transmitting apparatus which has a playback control signal stored in the ANC part and an SDTI data receiving apparatus which plays back the SDTI data based on the control signal. For example, the present invention is applicable to an A/V server which works to transmit and also receives SDTI data. Also, the present invention is applicable to a data transmission/reception system in which an SDTI data transmitter is the A/V server 1 while an SDTI data receiver is a VTR, and also to a data transmission/reception system in which an SDTI transmitter is a VTR while an SDTI receiver is the A/V server 1. Further, the present invention may be such that SDTI data including HDCAM signal is transmitted and received by an apparatus which encodes and decoders HDCAM signal.

Furthermore, the aforementioned embodiment of the present invention has been described concerning the A/V server 1 having four systems including one input system and three output systems. However, the A/V server 1 may have any number of input/output systems.

As apparent from the foregoing description, the present invention can of course be modified in various manners without departing from the scope and spirit thereof.

## Claims

1. A data transmitter which transmits compressed video and audio data by serializing data having a structure composed of a pay-load part in which data including compressed video data is stored, a start sync code part disposed before the pay-load part and in which a start of active video code indicative of the start of the pay-load part is stored, an ancillary data part disposed before the start sync code part and in which information including audio data and auxiliary data are stored, and an end sync code part disposed before the ancillary data part and in which an end of active video code indicative of the end of the pay-load part, the apparatus comprising:
a controlling means for generating process information indicative of a process of processing video data in a receiver which receives serial data obtained by serializing the above data; and
a data generating means for generating data by storing the process information generated by the controlling means into the ancillary means;
the data including the process information generated by the data generating means and having the above data structure being serialized for transmission.

2. The apparatus according to claim 1, wherein the process information is sequence information indicative of an output sequence of the video data of the data.

3. The apparatus according to claim 2, wherein the sequence information indicates fields forming next video and audio data the receiver is to output.

4. The apparatus according to claim 2, wherein the sequence information is a combination of addresses corresponding to a plurality of storage areas, respectively, in a storage means provided in the receiver to hold, in each field thereof, a plurality of fields of the video and audio data.

5. The apparatus according to claim 1, wherein the data having the data structure is in a serial digital transport interface format defined in the SMPTE-305 standard.

6. The apparatus according to claim 1, wherein the compressed video data is an HDCAM signal.

7. A data transmitting method for transmitting compressed video and audio data by serializing data having a structure composed of a pay-load part in which data including compressed video data is stored, a start sync code part disposed before the pay-load part and in which a start of active video code indicative of the start of the pay-load part is stored, an ancillary data part disposed before the start sync code part and in which information including audio data and auxiliary data are stored, and an end sync code part disposed before the ancillary data part and in which an end of active video code indicative of the end of the pay-load part, the method comprising steps of:
generating process information indicative of a process of processing the video data in a receiver which receives serial data obtained by serializing the above data; and
generating data by storing the generated process information into the ancillary means;
the data including the generated process information and having the above data structure being serialized for transmission.

8. The method according to claim 7, wherein the process information is sequence information indicative of an output sequence of the video data of the data.

9. The method according to claim 8, wherein the sequence information indicates fields forming next video and audio data the receiver is to output.

10. The method according to claim 8, wherein the sequence information is a combination of addresses corresponding to a plurality of storage areas, respectively, in a storage means provided in the receiver to hold, in each field thereof, a plurality of fields of the video and audio data.

11. The apparatus according to claim 7, wherein the data having the data structure is in a serial digital transport interface format defined in the SMPTE-305 standard.

12. The apparatus according to claim 7, wherein the compressed video data is an HDCAM signal.

13. A data receiver which receives serial data transmitted from a data transmitter which transmits compressed video and audio data by serializing data having a structure composed of a pay-load part in which data including compressed video data is stored, a start sync code part disposed before the pay-load part and in which a start of active video code indicative of the start of the pay-load part is stored, an ancillary data part disposed before the start sync code part and in which information including audio data and auxiliary data are stored, and an end sync code part disposed before the ancillary data part and in which an end of active video code indicative of the end of the pay-load part, the apparatus comprising:
a storage means for holding the video and audio data; and
a reading sequence controlling means for controlling the sequence of reading the video and audio data held in the storage means based on process information stored in the ancillary data part and indicative of a process of processing the video data.

14. The apparatus according to claim 13, wherein the process information is sequence information indicative of an output sequence of the video data of the data.

15. The apparatus according to claim 14, wherein the sequence information indicates fields forming next video and audio data to be read from the storage means.

16. The apparatus according to claim 14, wherein:
the storage means consists of a plurality of storage areas which hold, in each field thereof, a plurality of fields of the video and audio data; and
the sequence information is a combination of addresses corresponding to the plurality of storage areas, respectively.

17. The apparatus according to claim 13, wherein the data having the data structure is in a serial digital transport interface format defined in the SMPTE-305 standard.

18. The apparatus according to claim 13, wherein the compressed video data is an HDCAM signal.

19. A data receiving method for receiving serial data transmitted by a data transmitting method in which compressed video and audio data are transmitted by serializing data having a structure composed of a pay-load part in which data including compressed video data is stored, a start sync code part disposed before the pay-load part and in which a start of active video code indicative of the start of the pay-load part is stored, an ancillary data part disposed before the start sync code part and in which information including audio data and auxiliary data are stored, and an end sync code part disposed before the ancillary data part and in which an end sync code indicative of the end of the pay-load part, the method comprising steps of:
holding the video and audio data in a storage means; and
controlling the sequence of reading the video and audio data stored in the storage means based on process information stored in the ancillary data part and indicative of a process of processing of the video data.

20. The method according to claim 19, wherein the process information is sequence information indicative of an output sequence of the video data of the data.

21. The method according to claim 20, wherein the sequence information indicates fields forming next video and audio data to be read from the storage means.

22. The apparatus according to claim 20, wherein:
the storage means consists of a plurality of storage areas which hold, in each field thereof, a plurality of fields of the video and audio data; and
the sequence information is a combination of addresses corresponding to the plurality of storage areas, respectively.

23. The method according to claim 19, wherein the data having the data structure is in a serial digital transport interface format defined in the SMPTE-305 standard.

24. The method according to claim 19, wherein the compressed video data is an HDCAM signal.
